# EUROPÄISCHE PATENTSCHRIFT

(11) **EP 1 058 033 B1**
(45) Veröffentlichungstag und Bekanntmachung des Hinweises auf die Patenterteilung: **28.04.2004**
(21) Anmeldenummer: 00106499.7
(22) Anmeldetag: 25.03.2000
(51) Int. Cl.: F16H 53/02, B23P 11/00, F16D 1/08, F01L 1/047

(54) **Nocken für zusammensgesetzte Nockenwelle**
Cam for composite camshaft
Came pour arbre à cames composé

(30) Priorität: 01.06.1999 DE 19925028
(43) Veröffentlichungstag der Anmeldung: 06.12.2000
(73) Patentinhaber: ThyssenKrupp Automotive AG, 44793 Bochum (DE)
(72) Erfinder: Leuthold, Rudolf, Dr.-Ing., 7214 Grüsch (CH)

(56) Entgegenhaltungen:
- US-A- 2 082 379
- US-A- 5 307 708

## Beschreibung

Die Erfindung betrifft die Ausbildung eines Nockens für eine zusammengesetzte Nockenwelle zur Steuerung von Ventilen bei Verbrennungskraftmaschinen mit den Merkmalen des Oberbegriffs des Anspruchs 1.

Derartige Nocken und Nockenwellen sind in der DE 41 21 951 C1 beschrieben. Um ein Aufschieben des Nockens auf einen mit entsprechenden Materialanhäufungen - versehenen Grundkörper zu gewährleisten, lehrt die DE 41 21 951 C1, daß die Ausnehmung des Nockens zumindest auf einer Seite und zumindest über einen Teil ihrer axialen Länge trichterartig aufgeweitet ist, wobei das Außenmaß der Mündungsöffnung wenigstens der Höhe der als Wülste oder Stege ausgebildeten Materialanhäufungen entspricht. Dabei wird vorgeschlagen, daß die trichterartige Aufweitung eine Länge aufweist, die einem Fünftel der Breite des Nockens entspricht und einen Kegelwinkel von ca. 20° aufweist.

Bei dieser Ausbildung ist trotz des trichterartigen Einlaufs eine hohe Einpreßkraft erforderlich und die zentrische Lage des Nockens auf dem Grundkörper kann teilweise nicht exakt eingehalten werden.

Der Erfindung liegt die Aufgabe zugrunde, den trichterartigen Einführbereich an der Bohrung des aufpreßbaren Nockens derartig weiterzubilden, daß er noch sicherer auf dem Grundkörper sitzt und seine zentrische Lage noch besser eingehalten werden kann.

Diese Aufgabe wird erfindungsgemäß mit den Merkmalen des Anspruchs 1 gelöst. Vorteilhafte Aus- und Weiterbildungen sind in den Ansprüchen 2 bis 8 beschrieben.

Ein Ausführungsbeispiel der Erfindung ist in der Zeichnung dargestellt und wird im folgenden näher beschrieben. Es zeigen
Fig. 1 eine perspektivische Darstellung einer zusammengesetzten Nockenwelle,
Fig. 2 die Ansicht eines Nockens,
Fig. 3 Nocken und Grundkörper vor dem Aufpressen des Nockens,
Fig. 4 Nocken und Grundkörper nach dem Aufpressen des Nockens,
Fig. 5 einen Schnitt durch den Nocken und
Fig. 6 das Detail VI aus Fig. 5.

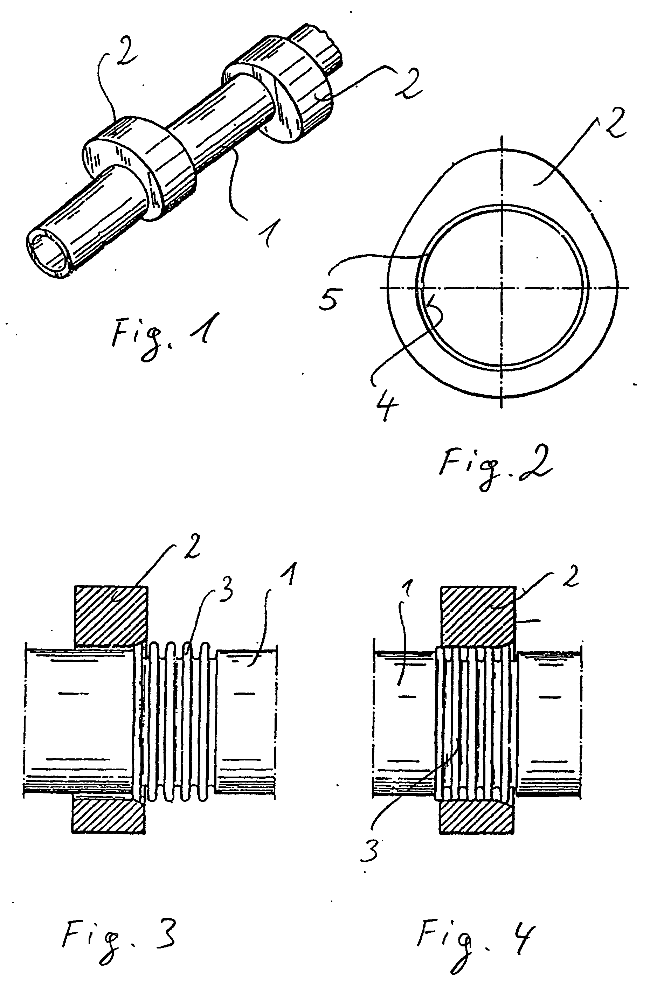

Wie aus den Fig. 1 bis 4 erkennbar ist, weist eine zusammengesetzte Nockenwelle einen Grundkörper 1 auf, auf den Nocken 2 aufpreßbar sind. Die Stellung der jeweiligen Nocken 2 zum Grundkörper 1 sowie die Form der Nocken 2 ergeben sich aus den Anforderungen der Verbrennungskraftmaschine. Im Ausführungsbeispiel wird als Grundkörper 1 ein Rohr verwendet. Dieses Rohr ist am Sitz für den Nocken 2 als Wellrohr ausgebildet. Die Wellen 3 des Wellrohrbereichs weisen einen größeren Durchmesser auf als die Bohrung 4 des Nockens 2. Der Einführbereich 5 des Nockens 2 ist trichterartig ausgebildet, wobei der äußerste Durchmesser des Einführbereichs 5 wenigstens dem Außendurchmesser der Wellen 3 entspricht. Beim Aufpressen der Nocken 2 auf die Wellen 3 des Grundkörpers 1 wird der Außendurchmesser letzterer reduziert. Durch diese plastische und elastische Verformung der Wellen 3 wird ein fester Sitz der Nocken 2 auf dem Grundkörper 1 gewährleistet. Üblicherweise weisen die Nocken 2 zumindest im Bereich der Bohrung 4 eine größere Härte auf als der Grundkörper 1.

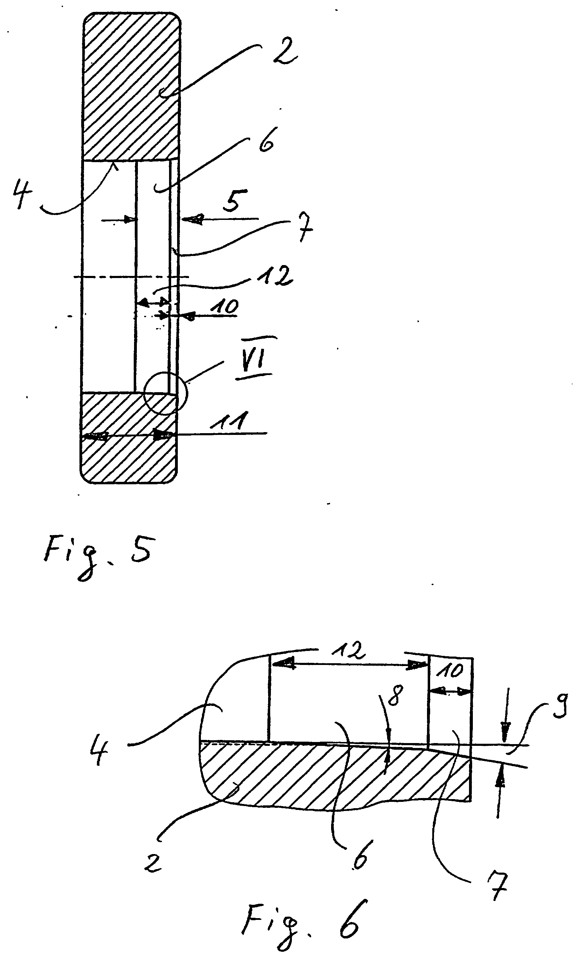

Aus den Fig. 5 und 6 ist der Einführbereich 5 der Nocken 2 im Detail erkennbar. Der Einführbereich 5 weist zwei hintereinander angeordnete Kegelabschnitte 6, 7 auf. Die Kegelabschnitte 6, 7 sind mit unterschiedlichen Kegelwinkeln und unterschiedlicher Länge ausgebildet. Der innere Kegelwinkel beträgt 4°. Das ergibt für den halben Kegelwinkel 8 einen Wert von 2°. Der Kegelwinkel des äußeren Kegelabschnittes 7 beträgt 20°. Somit weist der halbe Kegelwinkel 9 eine Neigung von 10° auf.

Die Länge 10 des äußeren Kegelabschnittes 7 beträgt 0,09 der Dicke 11 des Nockens 2. Die Länge 12 des inneren Kegelabschnittes 6 beträgt 0,36 der Dicke 11 des Nockens 2.

Je nach technischen Erfordernissen kann der Einführbereich 5 auch mehr als zwei hintereinander angeordnete Kegelabschnitte aufweisen. Dieses kann besonders dann sinnvoll sein, wenn die Nocken 2 eine sehr große Dicke 11 aufweisen.

## Patentansprüche

1. Nocken mit einer Bohrung und einem trichterartig erweiterten Einführbereich (5) an der Bohrung (4) des auf einen Grundkörper(1) aufpreßbaren Nockens (2) für zusammengesetzte Nockenwellen, **dadurch gekennzeichnet,**
- **daß** der Einführbereich (5) wenigstens zwei hintereinander angeordnete Kegelabschnitte (6, 7) mit unterschiedlichen, sich nach außen vergrößernden Kegelwinkeln aufweist, und
- **daß** sich der Kegelwinkel der hintereinander angeordneten Kegelabschnitte (6, 7) jeweils um das Drei- bis Siebenfache vergrößert.

2. Nocken nach Anspruch 1, **dadurch gekennzeichnet, daß** sich die Kegelwinkel der hintereinander angeordneten Kegelabschnitte (6, 7) jeweils um das Fünffache vergrößern.

3. Nocken nach Anspruch 1, **dadurch gekennzeichnet, daß** bei zwei hintereinander angeordneten Kegelabschnitten (6, 7) der innere Kegelabschnitt (6) einen Kegelwinkel von 3° bis 5° und der äußere Kegelabschnitt (7) einen Kegelwinkel von 15° bis 25° aufweist.

4. Nocken nach Anspruch 1, **dadurch gekennzeichnet, daß** bei zwei hintereinander angeordneten Kegelabschnitten (6, 7) der innere Kegelabschnitt (6) einen Kegelwinkel von 4° und der äußere Kegelabschnitt (7) einen Kegelwinkel von 20° aufweist.

5. Nocken nach einem oder mehreren der vorangegangenen Ansprüche, **dadurch gekennzeichnet, daß** die hintereinanderliegenden Kegelabschnitte (6, 7) von innen nach außen kürzer werdend ausgebildet sind.

6. Nocken nach Anspruch 5, **dadurch gekennzeichnet, daß** bei zwei hintereinander angeordneten Kegelabschnitten (6, 7) der innere Kegelabschnitt (6) eine Länge (12) von 0,30 bis 0,40 und der äußere Kegelabschnitt (7) eine Länge (10) von 0,08 bis 0,12 der Dicke (11) des Nockens (2) aufweist.

7. Nocken nach Anspruch 5, **dadurch gekennzeichnet, daß** bei zwei hintereinander angeordneten Kegelabschnitten (6, 7) der innere Kegelabschnitt (6) eine Länge (12) von **3 bis 6 mm** und der äußere Kegelabschnitt (7) eine Länge (11) von 1 bis 3 mm aufweist.

## Claims

1. Cam having a bore and an insertion region (5), which extends in a funnel-like manner, on the bore (4) of the cam (2), which can be pressed on to a basic body (1), for composite cam shafts, **characterised in that**
- the insertion region (5) comprises at least two conical portions (6, 7) which are disposed one behind the other and have different cone angles which increase in size in an outwards direction, and
- the cone angle of the conical portions (6, 7) which are disposed one behind the other increases in each case by 3 to 7 times its size.

2. Cam as claimed in claim 1, **characterised in that** the cone angles of the conical portions (6, 7) which are disposed one behind the other increase in each case by 5 times their size.

3. Cam as claimed in claim 1, **characterised in that** in the case of two conical portions (6, 7) which are disposed one behind the other, the inner conical portion (6) comprises a cone angle of 3° to 5° and the outer conical portion (7) comprises a cone angle of 15° to 25°.

4. Cam as claimed in claim 1, **characterised in that** in the case of two conical portions (6, 7) which are disposed one behind the other, the inner conical portion (6) comprises a cone angle of 4° and the outer conical portion (7) comprises a cone angle of 20°.

5. Cam as claimed in any one of the preceding claims, **characterised in that** the conical portions (6, 7) which lie one behind the other are formed in such a manner as to become shorter from the inside outwards.

6. Cam as claimed in claim 5, **characterised in that** in the case of two conical portions (6, 7) which are disposed one behind the other, the inner conical portion (6) comprises a length (12) of 0.30 to 0.40 and the outer conical portion (7) comprises a length (10) of 0.08 to 0.12 of the thickness (11) of the cam (2).

7. Cam as claimed in claim 5, **characterised in that** in the case of two conical portions (6, 7) which are disposed one behind the other, the inner conical portion (6) comprises a length (12) of **3 to 6 mm** and the outer conical portion (7) comprises a length (11) of **1 to 3 mm.**

## Revendications

1. Came avec un alésage, et une zone d'introduction (5) élargie en forme d'entonnoir sur l'alésage (4) de la came (2) prévue pour être emmanchée par pression sur un corps de base (1) pour arbres à cames composés, **caractérisée en ce que**
- le secteur d'introduction (5) présente au moins deux sections coniques (6, 7) disposées l'une à la suite de l'autre, avec des angles de conicité différents, augmentant vers l'extérieur et
- les angles de conicité des sections coniques (6, 7), disposées l'une à la suite de l'autre, augmentent chacun du triple au septuple.

2. Came selon la revendication 1, **caractérisée en ce que** les angles de conicité des sections coniques (6, 7), disposées l'une à la suite de l'autre, augmentent chacun du quintuple.

3. Came selon la revendication 1, **caractérisée en ce que,** lorsqu'il y a deux sections coniques (6, 7), disposées l'une à la suite de l'autre, la section conique intérieure (6) présente un angle de conicité de 3° à 5° et la section conique extérieure (7) un angle de conicité de 15° à 25°.

4. Came selon la revendication 1, **caractérisée en ce que,** lorsqu'il y a deux sections coniques (6, 7), disposées l'une à la suite de l'autre, la section conique intérieure (6) présente un angle de conicité de 4° et la section conique extérieure (7) un angle de conicité de 20°.

5. Came selon l'une ou plusieurs des revendications précédentes, **caractérisée en ce que** les sections coniques (6, 7), disposées l'une derrière l'autre se rétrécissent de l'intérieur vers l'extérieur.

6. Came selon la revendication 5, **caractérisée en ce que,** lorsqu'il y a deux sections coniques (6, 7), disposées l'une derrière l'autre, la section conique intérieure (6) présente une longueur (12) de 0,30 à 0,40 et la section conique extérieure (7) une longueur (10) de 0,08 à 0,12 de l'épaisseur (11) de la came (2).

7. Came selon la revendication 5, **caractérisée en ce que,** lorsqu'il y a deux sections coniques (6, 7), disposées l'une derrière l'autre, la section conique intérieure (6) présente une longueur (12) de 3 à 6 mm et la section conique extérieure (7) une longueur (10) de **1 à 3 mm.**
